# EUROPEAN PATENT SPECIFICATION

(11) **EP 1 795 421 B1**
(45) Date of publication and mention of the grant of the patent: **08.09.2010**
(21) Application number: 06025464.6
(22) Date of filing: 08.12.2006
(51) Int. Cl.: B60T 11/20, B60T 8/26, B60T 8/32, B60T 7/10, B60T 17/22

(54) **Brake actuator device for bar-handle vehicle**
Bremsantriebsvorrichtung für Fahrzeug mit Lenkstange
Dispositif d'actionnement de freinage pour véhicule avec guidon

(30) Priority: 08.12.2005 JP 2005354956; 28.12.2005 JP 2005377667; 28.12.2005 JP 2005377676; 10.01.2006 JP 2006001983
(43) Date of publication of application: 13.06.2007
(73) Proprietor: NISSIN KOGYO CO., LTD., Ueda-shi, Nagano (JP)
(72) Inventor: Kusano, Toshihiro c/o NISSIN KOGYO CO. LTD., Nagano (JP); Hatakoshi, Genichi c/o NISSIN KOGYO CO. LTD., Nagano (JP); Tsuchida, Tetsuo c/o NISSIN KOGYO CO. LTD., Nagano (JP)
(74) Representative: HOFFMANN EITLE

(56) References cited:
- GB-A- 1 239 805
- JP-A- 9 254 771
- JP-A- 2004 034 909
- US-A- 4 785 683

## Description

### BACKGROUND OF THE INVENTION

### Field of the invention

The present invention relates to an actuator device mounted to a bar-handle vehicle such as a motorcycle, and more particularly, to an actuator device for a bar-handle vehicle in which a rotation member such as an operation lever for operating a clutch or a brake is pivotally supported by a cylinder body of an actuator attached to a bar handle of the bar-handle vehicle.

### Description of the related art

In a bar-handle vehicle such as a motorcycle, an actuator device in which a hydraulic pressure master cylinder as an actuator and a rotation member such as an operation lever are combined is attached to a bar handle. In the rotation member, a hinged portion is pivotally supported by a lever holder provided in a cylinder body of a hydraulic pressure master cylinder and a stopper portion disposed to protrude from the hinged portion is allowed to abut on a stopper abutting surface provided in an axial direction of the bar handle in the cylinder body, thereby restricting the rotation of the rotation member toward an anti-operation side (for example, see Japanese Patent Unexamined Publications JP-A-2004-34909 and JP-A-9-254771, or GB1239805 A.

In a non-operation state of the above-mentioned actuator device, the stopper portion of the rotation member abuts on the stopper abutting surface of the cylinder body to restrict the rotation of the rotation member toward the anti-operation side. When the rotation member rotates from this state to operate a clutch or a brake, the stopper portion is separated from the stopper abutting surface of the cylinder body. Accordingly, foreign substances such as leaves may be inserted into a gap formed between the stopper portion and the stopper abutting surface. Thus when the operation of the rotation member is released, the rotation member may not be returned to a predetermined position.

### SUMMARY OF THE INVENTION

An object of the present invention is to provide an actuator device for a bar-handle vehicle which can prevent foreign substances from being inserted into a gap between a stopper portion of a rotation member and a stopper abutting surface of a cylinder body at the time of operating a rotation member with a simple structure and which can obtain a stable operation feeling.

In order to achieve the afore-mentioned object, according to a first aspect of the invention, there is provided an actuator device for a bar-handle vehicle, comprising:
a cylinder body attached to a bar-handle; and
a rotation member pivotally supported on the cylinder body,
   wherein a stopper portion protruded from the rotation member abuts on a stopper abutting surface on the cylinder body to thereby restrict a rotational motion of the rotation member to an anti-operation side,
the actuator device is characterized in that:

the stopper abutting surface is formed perpendicular to an axial line of the bar handle and
a front cover wall portion covering an abutting portion between the stopper portion and the stopper abutting surface is provided integrally on a side of the cylinder body opposite to the bar handle.

According to a second aspect of the present invention, it is preferable that a top cover wall portion covering the abutting portion between the stopper portion and the stopper abutting surface is provided integrally on a top side of the cylinder body.
According to a third aspect of the present invention, it is preferable that a switch operation portion operating an operation element of a brake lamp switch or a starter control switch is formed by extending the stopper portion and
an engaging portion between the operation element and the switch operation portion is covered with the front cover wall portion.

According to a fourth aspect of the present invention, it is preferable that the rotation member is an operation lever.
Further, according to a fifth aspect of the present invention, it is preferable that the rotation member is an interlocking member transmitting a movement- of a slave cylinder to a hydraulic pressure master cylinder.

According to a sixth aspect of the present invention, it is preferable that the actuator device is exposed externally.

According to the first aspect of the invention, it is possible to prevent foreign substances from being inserted into the gap between the stopper portion of the rotation member and the stopper abutting surface of the cylinder body by the front cover wall portion. When the stopper abutting surface is provided in the axial direction of the bar handle of the cylinder body as in the related art, foreign substances may be inserted into the gap between the front cover wall portion and the stopper abutting surface. However, when the stopper abutting surface of the cylinder body is formed perpendicular to the axial line of the bar handle like the first aspect, the foreign substances are not inserted into the gap between the front cover wall portion and the stopper abutting surface. Accordingly, it is possible to always operate the rotation member in an excellent state, thereby obtaining a stable operation feeling. It is also possible to prevent traveling wind from entering the gap between the stopper portion and the stopper abutting surface to cause a noise such as wind roar. Since the front cover wall portion is formed integrally with the cylinder body, the cylinder body does not increase in size, thereby suppressing cost.

According to the second aspect, since the upper portions of the stopper portion and the stopper abutting surface are covered with the top cover wall portion, it is possible to more effectively prevent foreign substances from entering the gap between the stopper portion of the rotation member and the stopper abutting surface of the cylinder body and to prevent the occurrence of noise.

According to the third aspect, it is possible to prevent foreign substances from being inserted into the gap between the operation element of the brake lamp switch or the starter control switch and the switch operation portion of the rotation member, thereby always accurately operating the brake lamp switch or the starter control switch.

According to the fourth aspect, it is possible to operate the operation lever as the rotation member with an excellent state, thereby obtaining a stable operation feeling.

According to the fifth aspect, it is possible to operate the operation lever as the rotation member with an excellent state, thereby smoothly operating an interlocking brake.

According to the sixth aspect, it is possible to prevent foreign substances from being inserted into the gap between the stopper portion of the rotation member and the stopper abutting surface of the cylinder body, even when the actuator device is not covered with a cowl, etc.

### BRIEF DESCRIPTION OF THE DRAWINGS

Fig. 1 is a side sectional view illustrating a part of an actuator device according to a first embodiment of the invention;
Fig. 2 is a front sectional view of the actuator device;
Fig. 3 is a front sectional view of the actuator device at the time of operating a front-wheel brake lever;
Fig. 4 is a front sectional view of the actuator device at the time of operating a brake pedal;
Fig. 5 is a cross-sectional view taken along Line V-V of Fig. 1;
Fig. 6 is an explanatory diagram illustrating a brake system employing the actuator device according to the invention;
Fig. 7 is a front sectional view illustrating an actuator device according to a second embodiment of the invention; and
Fig. 8 is a side sectional view illustrating a part of the actuator device.

### Best Mode for Carrying out the Invention

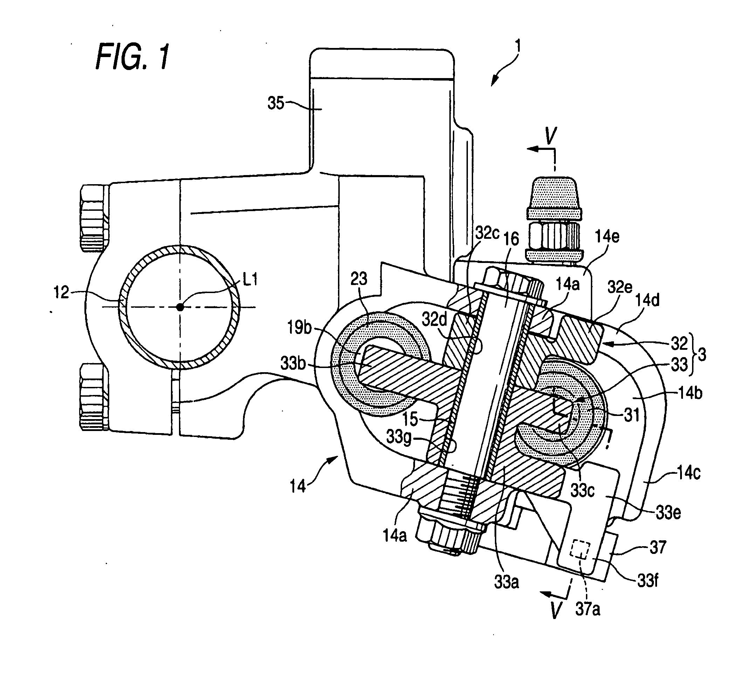

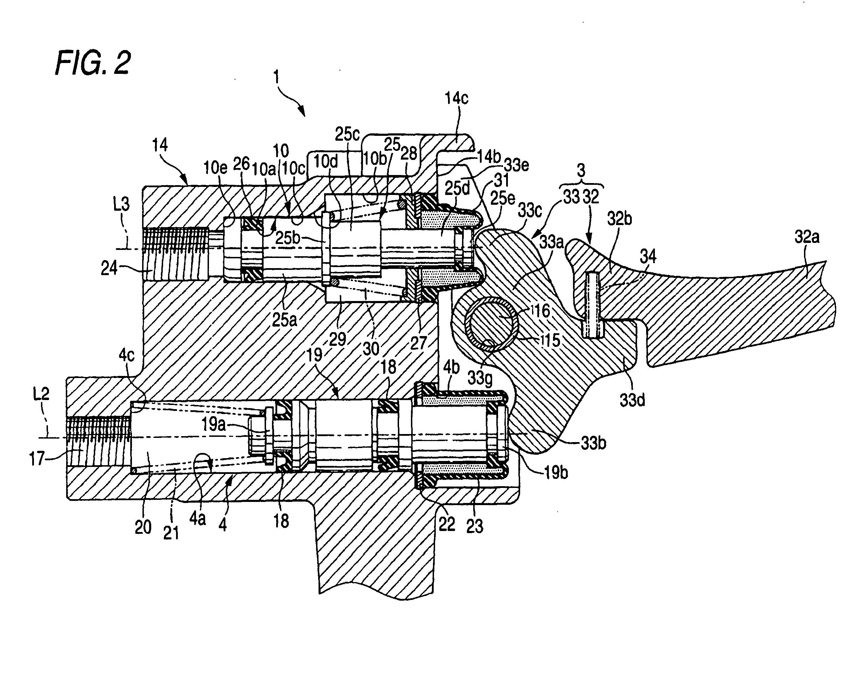

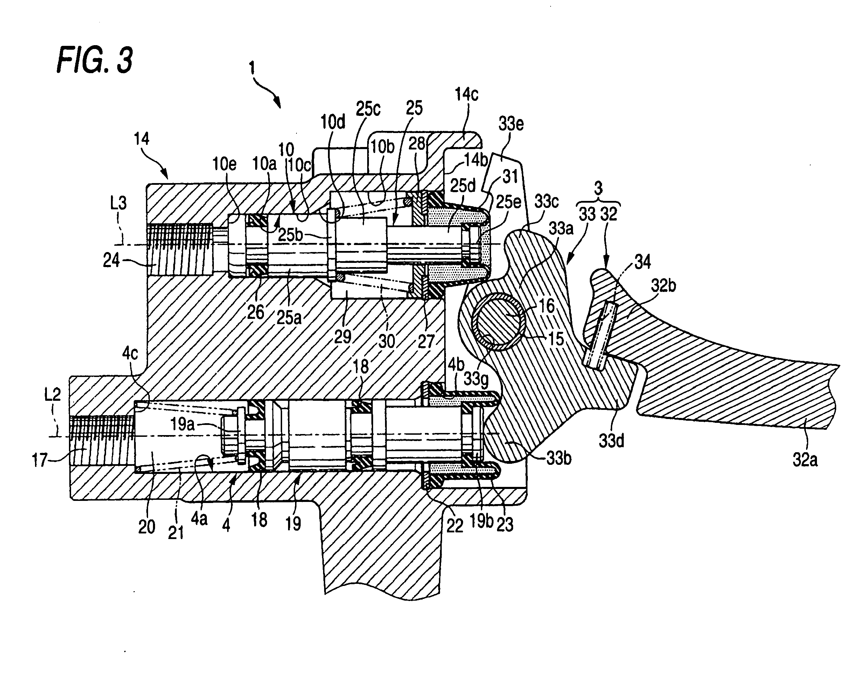

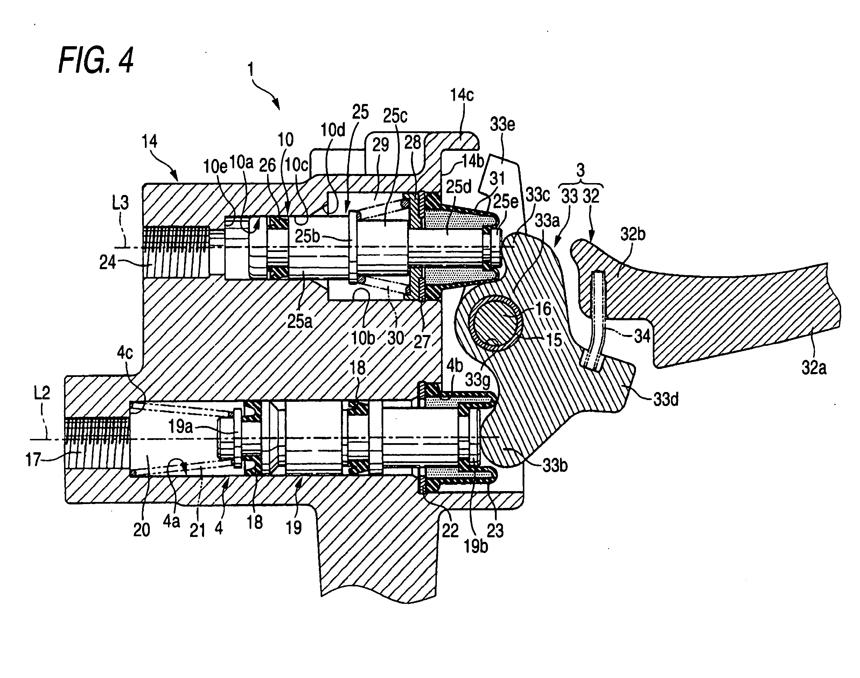

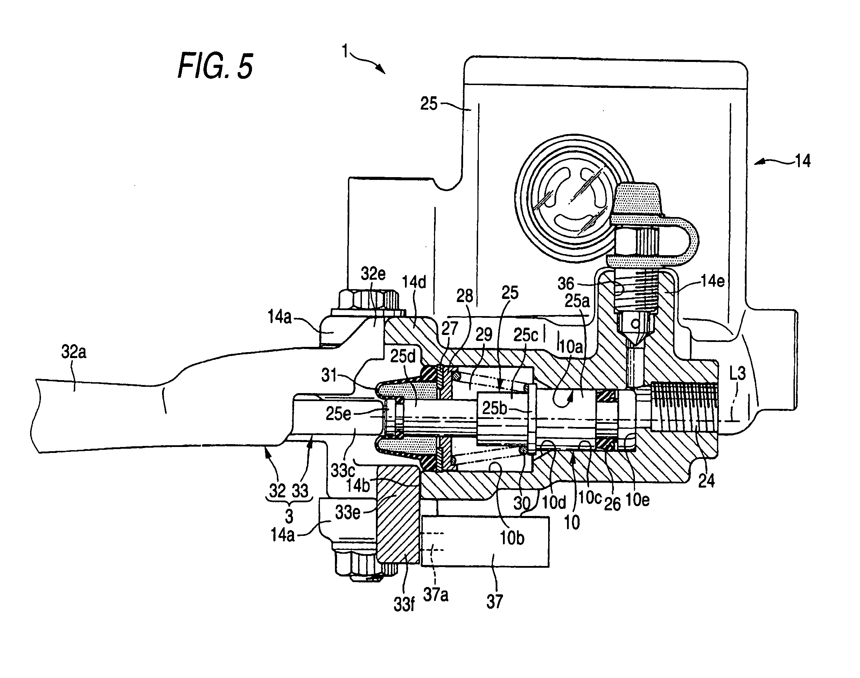

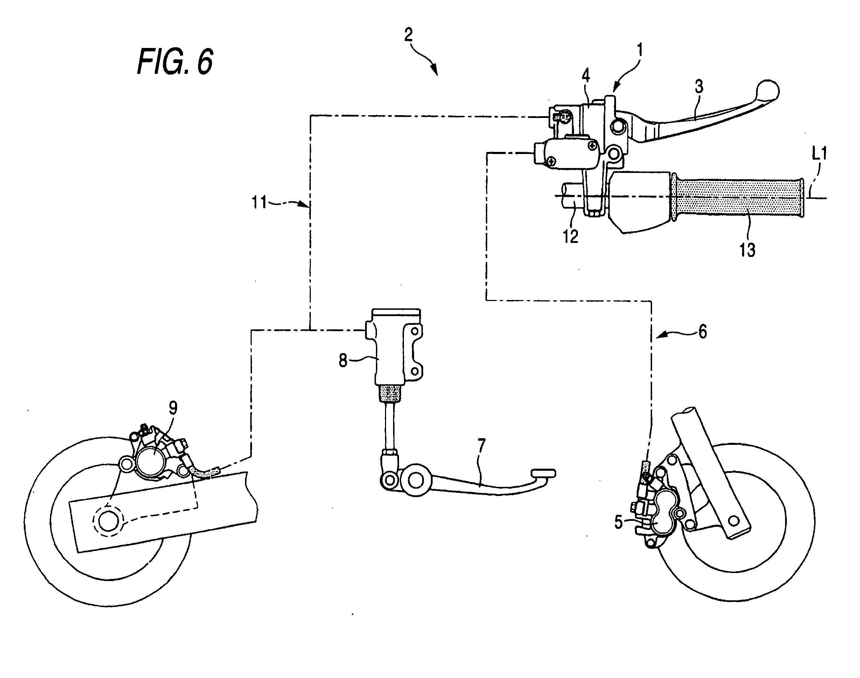

Hereinafter, embodiments of the invention will be described in detail with reference to the drawings. Figs. 1 to 6 show a first embodiment of the invention, where Fig. 1 is a side sectional view illustrating a part of an actuator device, Fig. 2 is a front sectional view of the actuator device, Fig. 3 is a front sectional view of the actuator device at the time of operating a front-wheel brake lever, Fig. 4 is a front sectional view of the actuator device at the time of operating a brake pedal, Fig. 5 is a cross-sectional view taken along Line V-V of Fig. 1, and Fig. 6 is an explanatory diagram illustrating a brake system employing the actuator device according to the invention.

As shown in Fig. 6, the interlocking brake system for a bar-handle vehicle 2 employing the actuator device 1 according to this embodiment includes a first hydraulic pressure system 6 for supplying a hydraulic pressure through a front-wheel hydraulic pressure master cylinder 4 to a front-wheel brake 5 in accordance with the operation of an operation lever 3 as a front-wheel brake operation element and a second hydraulic pressure system 11 for supplying a hydraulic pressure through a rear-wheel hydraulic pressure master cylinder 8 to a rear-wheel brake 9 and an interlocking slave cylinder 10 in accordance with the operation of a brake pedal 7 as a rear-wheel brake operation element and operating the front-wheel hydraulic pressure master cylinder 4 through the interlocking slave cylinder 10 to supply the hydraulic pressure to the front-wheel brake 5.

The actuator device 1 according to this embodiment is attached to a vehicle body in a state where it is not covered with a cowl, etc. but exposed externally. The operation lever 3 is pivotally provided in the cylinder body 14 attached to the inside of the vehicle body adjacent to an accelerator grip 13 of a bar handle 12 steering a front wheel on the front side of the bar-handle vehicle. In the cylinder body 14, the front-wheel hydraulic pressure master cylinder 4 and the interlocking slave cylinder 10 are disposed in a direction parallel to an axial line L1 of the bar handle 12. On one side of the cylinder body 14, a pair of lever holders 14a and 14a is disposed to protrude from an intermediate position between the front-wheel hydraulic pressure master cylinder 4 and a cylinder bore opening of the interlocking slave cylinder 10. The operation lever 3 is pivotally provided in the lever holders 14a and 14a by a collar 15 and a pivot 16 disposed between the axial line L2 of the front-wheel hydraulic pressure master cylinder 4 and the axial line L3 of the interlocking slave cylinder 10.

The front-wheel hydraulic pressure master cylinder 4 is disposed at a position of the cylinder body 14 close to the bar handle 12. A bottomed first cylinder bore 4a used in the front-wheel hydraulic pressure master cylinder 4 is formed parallel to the axial line of the bar handle 12 and is opened toward the outside of the cylinder body 14. A large diameter portion 4b is formed on the opening side and a hydraulic fluid supply port 17 for supplying a hydraulic fluid to the front-wheel brake 5 is formed in the bottom portion 4c of the first cylinder bore 4a. A first piston 19 is inserted into the first cylinder bore 4a through two cup seals 18 and 18. A hydraulic chamber 20 is defined between the first piston 19 and the bottom portion 4c of the first cylinder bore 4a. The first piston 19 is biased toward the opening by a first return spring 21 disposed between a flange portion 19a formed on the base side of the first piston 19 and the bottom portion 4c and the retreat limit is restricted by a circlip 22 provided in a large diameter portion 4b of the first cylinder bore 4a. The edge portion 19b of the first piston 19 in a non-operating state protrudes from the first cylinder bore 4a and a first dust boot 23 is disposed between the edge portion 19b and the opening of the large diameter portion 4b.

The interlocking slave cylinder 10 is disposed at a position distant from the bar handle 12 of the cylinder body 14. A bottomed second cylinder bore 10a used in the interlocking slave cylinder 10, is formed parallel to the axial line L1 of the bar handle 12 and the axial line L2 of the front-wheel hydraulic pressure master cylinder 4 and parallel to the first cylinder bore 4a, is opened to one side surface of the cylinder body 14. The bottomed second cylinder bore 10a includes a large diameter cylinder portion 10b close to the opening, a small diameter cylinder portion 10c close to the bottom portion, and a conical portion 10d connecting the large diameter cylinder portion 10b and the small diameter cylinder portion 10c to each other. A hydraulic fluid introduction port 24 to which the hydraulic pressure is supplied with the operation of the brake pedal 7 is formed in the bottom portion 10e of the second cylinder bore 10a to communicate with the small diameter cylinder portion 10c. The second piston 10b includes a large diameter shaft portion 25a inserted into the small cylinder portion 10c, a flange portion 25b formed in the cylinder opening side end of the large diameter shaft portion 25a, a medium diameter shaft portion 25c extending from the flange portion 25b, and a small diameter edge portion 25d extending from the medium diameter shaft portion 25c. The second piston 25 is inserted into the second cylinder bore 10a and a drop-out preventing member 28 is fitted to the opening of the large diameter cylinder portion 9b with a circlip 27. Accordingly, an air chamber 29 is defined by the drop-out preventing member 28, the large-diameter cylinder portion 10b, and the conical portion 10d. A second return spring 30 biasing the second piston 25 to the cylinder bore bottom is pivotally disposed between the drop-out preventing member 28 and the flange portion 25b. Since the medium diameter shaft portion 25c abuts on the drop-out preventing member 28, it is possible to accomplish the restriction of stroke of the second piston 25 and the drop-out prevention of the second piston 25. In a non-operation state, the edge portion 25e of the second piston 25 protrudes from the second cylinder bore 10a and a second dust boot 31 is disposed between the edge portion 25e and the opening of the large diameter cylinder portion 10b.

In the lever holders 14a and 14a, the operation lever 3 including a lever body 32 and an interlocking member 33 constituting the rotation member according to the invention is pivotally supported by the pivot 16 and the collar 15. The lever body 32 as one rotation member is formed in a rod shape and smoothly curved along the front portion of the accelerator grip 13. The lever body 32 includes an operation portion 32a operated by an operator, an interlocking member pressing arm 32b extending from the base of the operation portion 32a and serving to press the interlocking member 33 to rotate, and a hinged portion 32c supported by the lever holders 14a and 14a of the cylinder body 14, which are formed in a body. An insertion hole 32d for the pivot 6 and the collar 15 is formed in the hinged portion 32c and a stopper portion 32e abutting on the cylinder body 14 to restrict the rotation of the lever body 32 to an anti-operation side is formed to extends therefrom.

The interlocking member 33 as the other rotation member includes a middle hinged portion 33a supported by the lever holders 14a and 14a of the cylinder body 14, an are-shaped first operation arm 33b and an arc-shaped second operation arm 33c extending from the hinged portion 33a and abutting on the edge portions of the first piston 19 and the second piston 25, respectively, an abutting arm 33d opposite to the interlocking member pressing arm 32b formed in the lever body 32, a stopper portion 33e abutting on the stopper abutting surface 14b of the cylinder body 14 to restrict the rotation of the interlocking member 33 to the anti-operation side, and a switch operation portion 33f extending from the stopper portion 33e, which are all formed integrally. An insertion hole 33g for the pivot 16 and the collar 15 is formed in the hinged portion 33a. A spring member 34 biasing the lever body 32 to a non-operating position is pivotally formed between the abutting arm 33d and the interlocking member pressing arm 32b.

In the cylinder body 4, one side surface perpendicular to the axial line L1 of the bar handle 12 is used as the stopper abutting surface 14b abutting on the stopper portion 33e of the interlocking member 33, a front cover wall portion 14c covering the abutting portion between the stopper portion 33e and the stopper abutting surface 14b is integrally provided in the side of the cylinder body 14 opposite to the bar handle, a top cover wall portion 14d covering the abutting portion between the stopper portion 33e and the stopper abutting surface 14b is integrally provided in the upper portion of the cylinder body 14. In the cylinder body 14, a reservoir tank 35, which communicates with the first cylinder bore 4a through a port (not shown), is provided in the upper portion of the front-wheel hydraulic pressure master cylinder 4 and a breather boss portion 14e having a breather hole 36 communicating with the hydraulic fluid introduction port 24 on the second cylinder bore bottom side is provided in the upper portion of the interlocking slave cylinder 10. A brake lamp switch 37 is provided in the lower portion of the cylinder body 14 and an operation element 37a of the brake lamp switch 37 is disposed to protrude from the stopper abutting surface 14b. Regarding the first cylinder bore 4a and the second cylinder bore 10a, the first cylinder bore 4a, the large diameter portion 4b, the second cylinder bore 10a, the large diameter cylinder portion 10b, the small diameter cylinder portion 10c, the conical portion 10d, and the port (not shown) are formed in such a manner that sizes thereof are measured from the stopper abutting surface 14b by using the stopper abutting surface 14b of the cylinder body 14 as a work reference surface of both cylinder bores.

In the above-mentioned actuator device 1, as shown in Figs. 2 and 5, in the state where the lever body 32 and the brake pedal 7 are not operated, the rotation of the lever body 32 to the anti-operation side is restricted by allowing the stopper portion 32e to abut on the top cover wall portion 14d. Further, the rotation of the interlocking member 33 to the anti-operation side is restricted by allowing the stopper portion 32e to abut on the stopper abutting surface 14b of the cylinder body 13, in accordance with the elastic force of the first return spring 21 of the front-wheel hydraulic pressure master cylinder 4, the second return spring 30 of the interlocking slave cylinder 10, and the spring member 34. The switch operation portion 33f provided in the interlocking member 33 presses the operation element 37a and thus the brake lamp switch 37 is in the OFF state.

When the lever body 32 of the operation lever 3 rotates, as shown in Fig. 3, the interlocking member pressing arm 32b of the lever body 32 presses the abutting arm 33d of the interlocking member 33, the lever body 32 and the interlocking member 33 rotate toward the front-wheel hydraulic pressure master cylinder 4 about the pivot 16, and the first operation arm 33b of the interlocking member 33 presses the first piston 19 to the cylinder bore bottom against the elastic force of the first return spring 21. Accordingly, hydraulic pressure is generated in the hydraulic chamber 20 and the hydraulic pressure is supplied to the front-wheel brake 5 through the first hydraulic pressure system 6 from the hydraulic fluid supply port 17, thereby operating the front-wheel brake 5. With the rotation of the lever body 32, the stopper portion 32e of the lever body 32 becomes distant from the top cover wall portion 14d of the cylinder body 14, the stopper portion 33e of the interlocking member 33 becomes distant from the stopper abutting surface 14b, and the switch operation portion 33f becomes distant from the operation element 37a. Accordingly, the operation element 37a of the brake lamp switch 37 protrudes and the brake lamp switch 37 is changed to the ON state, thereby lighting a brake lamp not shown.

When the brake pedal 7 is operated, as shown in Fig. 4, hydraulic pressure is generated in a hydraulic chamber (not shown) of the rear-wheel hydraulic pressure master cylinder 8 and the hydraulic pressure is supplied to the rear-wheel brake 9 through the second hydraulic pressure system 11, thereby operating the rear-wheel brake 9. On the other hand, the hydraulic pressure generated in the hydraulic chamber of the rear-wheel hydraulic pressure master cylinder 8 is supplied to the second cylinder bore 10a through the second hydraulic pressure system 11 from the hydraulic fluid introduction port 24 of the interlocking slave cylinder 10, thereby pressing the second piston 25 to the cylinder bore opening against the elastic force of the second return spring 30. Accordingly, the edge portion 25e of the second piston 25 protrudes from the cylinder bore opening and pressed the second operation arm 33c of the interlocking member 33, thereby rotating the interlocking member 33 about the pivot 16. The interlocking member 33 rotates independently with the lever body 32 kept in the non-operating state in accordance with the expansion of the spring member 34 and the first operation arm 33b operates the front-wheel hydraulic pressure master cylinder 4, thereby operating the front-wheel brake 5 as described above. At this time, as the stopper portion 33e of the interlocking member 33 becomes apart from the stopper abutting surface 14b and the switch operation portion 33f becomes away from the operation element 37a, the operation element 37a of the brake lamp switch 37 protrudes and the brake lamp switch 37 is changed to the ON state, thereby lighting the brake lamp.

In the actuator device 1 according to this embodiment, as described above, the front cover wall portion 14c covering the abutting portion between the stopper portion 33e and the stopper abutting surface 14b is integrally provided in the side of the cylinder body 14 opposite to the bar handle. In addition, the top cover wall portion 14d covering the abutting portion between the stopper portion 33e and the stopper abutting surface 14b is integrally provided in the upper portion of the cylinder body 14. Accordingly, as described above, even when the stopper portion 33e of the interlocking member 33 and the stopper abutting surface 14b becomes away from each other to form a gap at the time of the rotational operation of the lever body 32 of the operation lever 3 or at the time of the operation of the brake pedal 7, foreign substances may not enter the gap. Accordingly, it is possible to smoothly operate the operation lever 3 and to obtain a stable braking force. In addition, even when a gap is formed between the switch operation portion 33f and the operation element 37a of the brake lamp switch 37 at the time of lighting the brake lamp with the rotation of the interlocking member 33, it is possible to prevent foreign substances from entering the gap and to always accurately operate the brake lamp switch 37, thereby lighting the brake lamp. The stopper abutting surface 14b is formed on the side surface of the cylinder body 14 so as to be perpendicular to the axial line L1 of the bar handle. Accordingly, even when the actuator device 1 is not covered with a cowl, etc., foreign substances may not enter the gap between the front cover wall portion and the stopper abutting surface during the traveling. It is also possible to prevent traveling wind from entering the gap between the stopper portion and the stopper abutting surface to cause a noise such as wind roar. Even when the actuator device 1 is not covered with a cowl, etc., it is possible to prevent foreign substances from entering the gap between the stopper portion 33e of the interlocking member 33 and the stopper abutting surface 14b of the cylinder body 14.

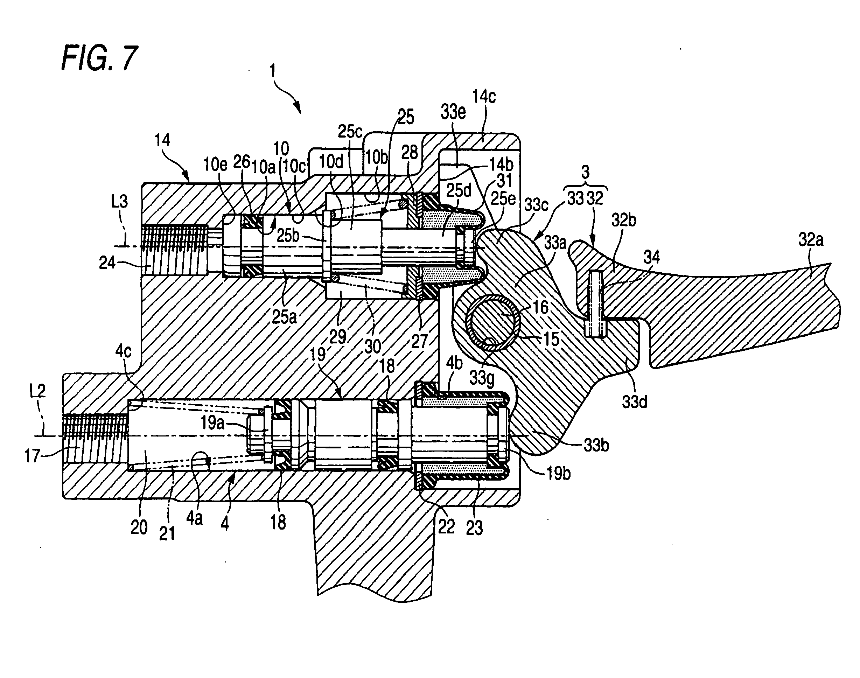

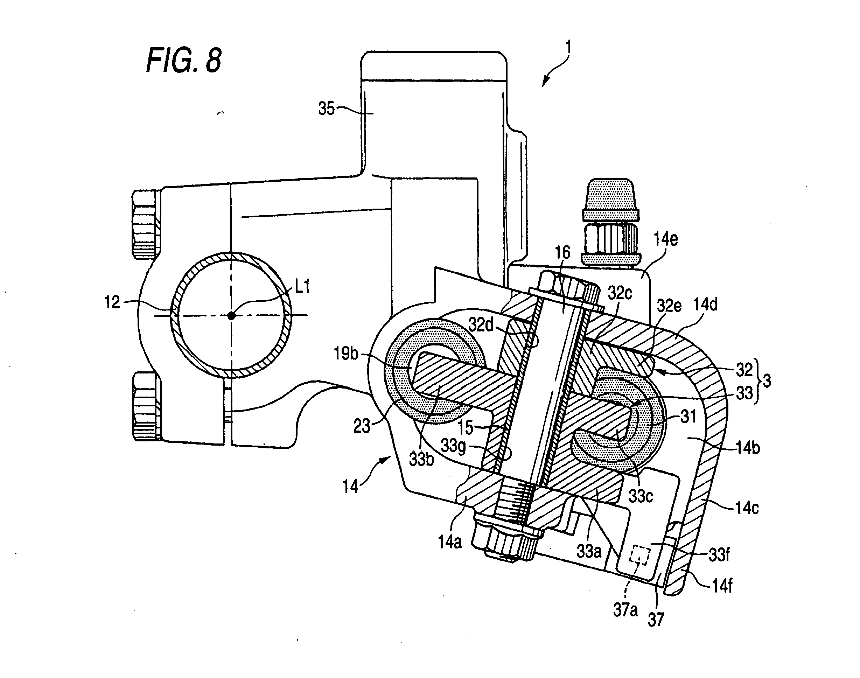

Figs. 7 and 8 show a second embodiment of the invention, where Fig. 7 is a front sectional view illustrating an actuator device according to a second embodiment of the invention and Fig. 8 is a side sectional view illustrating a part of the actuator device. The same element as those of the first embodiment are denoted by the same reference numerals and the detailed description thereof will be omitted.

In this embodiment, the front cover wall portion 14c, which is provided on the side of the cylinder body 14 opposite to the bar handle so as to cover the abutting portion between the stopper portion 33e and the stopper abutting surface 14b, is allowed to extend to the operation lever 3 and to the lower portion of the vehicle in order to form an extending cover wall portion 14f. An engaging portion between the brake lamp switch 37 and the switch operation portion 33f of the interlocking member 33 is covered with the extending cover wall portion 14f from the front side in a vehicle traveling direction. The rotation of the lever body 32 of this embodiment is restricted by allowing the stopper portion 32e to abut on the stopper abutting surface 14b similarly to the stopper portion 33e of the interlocking member 33.

According to this embodiment having the above-mentioned configuration, the gap formed between the stopper portion 33e of the interlocking member 33 and the stopper abutting surface 14b at the time of operating the operation lever 3 can be completely covered with the front cover wall portion 14c from the front side in the vehicle traveling direction, thereby satisfactorily preventing foreign substances from entering the gap. In addition, it is also possible to prevent foreign substances from entering the gap formed between the side surface of the brake lamp switch 37 and the switch operation portion 33f of the interlocking member 33, thereby accurately operating the brake lamp switch 37.

The actuator device according to the invention described above is not limited to the interlocking actuator device in which the operation lever is attached to the cylinder body having the hydraulic pressure master cylinder and the slave cylinder in a bundle, but may be applied to a hydraulic pressure master cylinder device in which an operation lever is attached to a cylinder body of a hydraulic pressure master cylinder. The invention is not limited to the brake actuator device, but may be applied to a clutch actuator device. In addition, the invention is not limited to the brake lamp switch, but may be applied to a device in which a starter control switch is attached to a cylinder body to serve as a rotation member. The rotation member according to the invention may be an operation lever having only the lever body and the stopper portion may be formed integrally with the lever body. The rotation member may be an operation lever in which the lever body and a knocker are combined and the stopper portion may be provided in one or both of the lever body and the knocker.

## Claims

1. An actuator device for a bar-handle vehicle, comprising:
a cylinder body (14) attached to a bar-handle (12); and
a rotation member (3) pivotally supported on the cylinder body (14),
wherein a stopper portion (33c) protruded from the rotation member (3) abuts on a stopper abutting surface (14b) on the cylinder body (14) to thereby restrict a rotational motion of the rotation member (3) to an anti-operation side,
the actuator device is **characterized in that**:
the stopper abutting surface (14b) is formed perpendicular to an axial line of the bar handle (12) and
a front cover wall portion (14c) covering an abutting portion between the stopper portion (33e) and the stopper abutting surface (14b) is provided integrally on a side of the cylinder body (14) opposite to the bar handle (12).

2. The actuator device for the bar-handle vehicle according to Claim 1, is **characterized in that**:
a top cover wall portion covering the abutting portion between the stopper portion and the stopper abutting surface is provided integrally on a top side of the cylinder body.

3. The actuator device for the bar-handle vehicle according to Claim 1, is **characterized in that:**
a switch operation portion operating an operation element of a brake lamp switch or a starter control switch is formed by extending the stopper portion, and
an engaging portion between the operation element and the switch operation portion is covered with the front cover wall portion.

4. The actuator device for the bar-handle vehicle according to any one of Claims 1 to 3, is **characterized in that** the rotation member is an operation lever.

5. The actuator device for the bar-handle vehicle according to any one of Claims 1 to 3, is **characterized in that** the rotation member is an interlocking member transmitting a movement of a slave cylinder to a hydraulic pressure master cylinder.

6. The actuator device for the bar-handle vehicle according to any one of Claims 1 to 5, is **characterized in that** wherein the actuator device is exposed externally.

## Patentansprüche

1. Betätigungsvorrichtung für ein Grifffahrzeug umfassend:
einen Zylinderkörper (14), der an einem Griff (12) angebracht ist; und
ein Rotationselement (3), das drehbar an dem Zylinderkörper (14) gehalten wird,
wobei ein Stoppabschnitt (33c), der von dem Rotationselement (3) vorsteht, an einer Stoppanschlagoberfläche (14b) an dem Zylinderkörper (14) anschlägt, um dadurch eine Rotationsbewegung des Rotationselements (3) zu einer Nichtbetriebsseite zu beschränken,
wobei die Betätigungsvorrichtung **dadurch gekennzeichnet ist, dass**:
die Stoppanschlagoberfläche (14b) senkrecht zu einer axialen Linie des Griffs (12) ausgebildet ist, und
ein Frontabdeckwandabschnitt (14c), der einen Anschlagabschnitt zwischen dem Stoppabschnitt (33c) und der Stoppanschlagoberfläche (14b) abdeckt, integral an einer Seite des Zylinderkörpers (14) gegenüber dem Griff (12) vorgesehen ist.

2. Betätigungsvorrichtung für das Grifffahrzeug nach Anspruch 1, **dadurch gekennzeichnet, dass**:
ein oberer Abdeckwandabschnitt, der den Anschlagabschnitt zwischen dem Stoppabschnitt und der Stoppanschlagoberfläche abdeckt, integral an einer oberen Seite des Zylinderkörpers vorgesehen ist.

3. Betätigungsvorrichtung für das Grifffahrzeug nach Anspruch 1, **dadurch gekennzeichnet, dass**:
ein Schalterbetriebsabschnitt, der ein Betriebselement eines Bremsleuchtenschalters oder eines Startsteuerungsschalters betreibt, durch Verlängern des Stoppabschnitts ausgebildet ist, und
ein Eingreifabschnitt zwischen dem Betriebselement und dem Schalterbetriebsabschnitt mit dem Frontabdeckungswandabschnitt abgedeckt ist.

4. Betätigungsvorrichtung für das Grifffahrzeug nach einem der Ansprüche 1 bis 3, **dadurch gekennzeichnet, dass** das Rotationselement ein Betriebshebel ist.

5. Betätigungsvorrichtung für das Grifffahrzeug nach einem der Ansprüche 1 bis 3, **dadurch gekennzeichnet, dass** das Rotationselement ein Zwischenfeststellelement ist, das eine Bewegung eines Nebenzylinders auf einen Hydraulikdruckhauptzylinder überträgt.

6. Betätigungsvorrichtung für das Grifffahrzeug nach einem der Ansprüche 1 bis 5, **dadurch gekennzeichnet, dass** die Betätigungsvorrichtung nach außen freigelegt ist.

## Revendications

1. Dispositif d'actionnement pour un véhicule à guidon, comprenant :
un corps de cylindre (14) attaché à un guidon (12) ; et
un élément de rotation (3) soutenue de façon pivotante sur le corps de cylindre (14) ;
dans lequel une partie formant arrêt (33c) dépassant de l'élément de rotation (3) bute sur une surface de butée d'arrêt (14b) sur le corps de cylindre (14) limitant de ce fait un mouvement rotatif de l'élément de rotation (3) à un côté anti-mise en oeuvre,
le dispositif d'actionnement est **caractérisé en ce que :**
la surface de butée d'arrêt (14b) est formée perpendiculairement à une ligne axiale du guidon (12), et
une partie de paroi de recouvrement avant (14c) recouvrant une partie de butée entre la partie formant arrêt (33c) et la surface de butée d'arrêt (14b) est prévue d'un seul tenant sur un côté du corps de cylindre (14) opposé au guidon (12).

2. Le dispositif d'actionnement pour le véhicule à guidon selon la revendication 1, est **caractérisé en ce que :**
une partie de paroi de recouvrement supérieure recouvrant la partie de butée entre la partie formant arrêt et la surface de butée d'arrêt est prévue d'un seul tenant sur un côté supérieur du corps de cylindre.

3. Le dispositif d'actionnement pour le véhicule à guidon selon la revendication 1, est **caractérisé en ce que :**
une partie de mise en oeuvre de commutateur actionnant un élément de mise en oeuvre d'un commutateur de lampe de frein ou un commutateur de commande de démarreur est formée en étendant la partie formant arrêt, et
une partie de mise en prise entre l'élément de mise en oeuvre et la partie de mise en oeuvre de commutateur est recouverte par la partie de paroi de recouvrement avant.

4. Le dispositif d'actionnement pour le véhicule à guidon selon l'une quelconque des revendications 1 à 3, est **caractérisé en ce que** l'élément de rotation est un levier de mise en oeuvre.

5. Le dispositif d'actionnement pour le véhicule à guidon selon l'une quelconque des revendications 1 à 3, **caractérisé en ce que** l'élément de rotation est un élément de verrouillage transmettant un mouvement d'un cylindre asservi à un maître-cylindre de pression hydraulique.

6. Le dispositif d'actionnement pour le véhicule à guidon selon l'une quelconque des revendications 1 à 5, est **caractérisé en ce que** le dispositif d'actionnement est exposé à l'extérieur.
